# EUROPEAN PATENT APPLICATION

(11) **EP 2 192 698 A1**
(43) Date of publication of application: **02.06.2010**
(21) Application number: 08305862.8
(22) Date of filing: 28.11.2008
(51) Int. Cl.: H04B 7/06

(54) **Selection of Precoding Vectors for Radio Base Station with multiple antennas**

(71) Applicant: Alcatel Lucent, 75008 Paris (FR)
(72) Inventor: Jung,Peter, 13158 Berlin (DE); Schreck, Jan, 10967 Berlin (DE); Ohm, Michael, 70372 Stuttgart (DE); Wunder, Gerhard, 10247 Berlin (DE)
(74) Representative: Wetzel, Emmanuelle

(57) **Abstract**

The invention relates to a method for resource allocation in a radio communication system, which comprises a base station with at least two antenna elements and at least one mobile station. Each mobile station uses reference signals received from the base station as a measure of the channel in order to calculate a first utility value (for instance the data rate) which would be possible for each combination of precoding vectors used at that mobile station and at the other mobile stations. Each mobile station can then calculate a second utility value which would result for each combination of precoding vectors for each of a set of system descriptions (channel approximations). The mobile the selects the system description which gives the best match between first and second utility values and feeds it back to the base station. The base station tries out all combinations of precoding vectors with the system description which has been fed back to it, in order to find the combination which gives the best utility value.

## Description

### FIELD OF THE INVENTION

The invention relates to a method for resource allocation in a radio communication system according to the preamble of claim 1, to a radio communication system according to the preamble of claim 13, to a base station according to the preamble of claim 14, and to a mobile station according to the preamble of claim 15.

### BACKGROUND OF THE INVENTION

By using an antenna system with multiple antenna elements at a base station of a radio communication system several beams in a downlink channel can be directed to different orientations. A so-called codebook determines transmission parameters for beams, which the base station is allowed to use for transmitting data to mobile stations. The elements of the codebook are called pre-coding vectors or beamformers. The pre-coding vectors of a codebook differ in their parameters and generally cover a whole sector or a whole cell.

In an OFDMA radio communication system a resource block for transmitting data to a mobile station comprises a sequence of OFDM symbols and a frequency range with a number of sub-carriers.

In 3GPP TS 36.211 V8.4.0 (2008-09) "Physical Channels and Modulation" a resource block standardised for LTE (LTE = Long Term Evolution) consists of 14 OFDM symbols and 12 consecutive sub-carriers. The frequency range for each resource block is known by the base station and each mobile station.

The combination of an OFDMA transmission technique and multiple antennas at the base station allows to schedule multiple mobile stations located at different locations within a sector of a radio cell with a same resource block of a same data frame using different pre-coding vectors.

A downlink channel between the base station and the mobile stations comprises for each mobile station a different transmission channel from the base station to the specific mobile station, because the mobile stations are generally located at different locations.

The optimal nonlinear coding, signal processing, and scheduling rules to achieve a maximum overall data rate is a theoretical problem of the information theory and known as DPC (DPC = dirty paper coding). DPC is a coding technique to pre-code the data for a mobile station in such a way that interference from downlink data transmitted to other mobile stations is cancelled. Information about the characteristic of all transmission channels between the base station and the mobile stations for each sub-carrier is required at the base station for using DPC. Due to limited capacity of the uplink channel from the mobile stations to the base station to report feedback information, DPC provides only an upper limit for the overall data rate and is not a realistic coding method.

In 3GPP R1-073937, Alcatel-Lucent, "Comparison aspects of fixed and adaptive beamforming for LTE downlink", 3GPP TSG RAN WG1 #50bis Shanghai, China, October 8-12, 2007 a method is proposed, that uses a codebook with pre-coding vectors in a fixed angular ordering. Each mobile station selects a pre-coding vector for each resource block, which provides the largest signal power for the mobile station on this resource block, herein after called a best pre-coding vector. An indication for the best pre-coding vector and a CQI value (CQI = channel quality information) is reported for each resource block from each mobile station to the base station. A beam distance criterion is used at the base station to reduce interference between different pre-coding vectors for a same resource block. The beam distance criterion means that two pre-coding vectors can be scheduled together only if a beam distance criterion is fulfilled. However, this method does not allow an optimal allocation of pre-coding vectors to the mobile stations, because the true interference power does not enter the decision algorithm of the beam distance criterion method.

Further methods use an indication reporting for the best pre-coding vector and an indication for a pre-coding vector with least interference, herein after called a best companion pre-coding vector, or indications for a set of pre-coding vectors above a first threshold value or indications for the set of pre-coding vectors above the first threshold value together with indications for a set of pre-coding vectors below a second threshold value from the mobile stations to the base station. These methods provide more realistic inter-beam interference power but at the expense of larger resource consumption of a feedback uplink channel.

The way of scheduling a number of mobile stations simultaneously by a base station within the sector of the radio cell affects the overall data rate of the base station. Therefore, it is the object of the invention to improve the overall data throughput of base stations using adequate feedback information and an adequate decision algorithm.

### SUMMARY OF THE INVENTION

This object is achieved by a method for resource allocation in a radio communication system, the radio communication system comprising a base station and at least one mobile station, the base station comprising a first antenna system with at least two antenna elements, the base station and the at least one mobile station comprising a codebook, the method comprising the steps of transmitting reference signals from the base station to the at least one mobile station and determining first feedback information by the at least one mobile station, wherein the feedback information comprises a first component indicating at least one system description approximating a characteristic of a transmission channel between the base station and the at least one mobile station and wherein the method further comprises the step of selecting at the base station a first pre-coding vector of the codebook for the at least one mobile station based on the first feedback information.

The object is further achieved by an independent claim 13 for the radio communication system, by an independent claim 14 for the base station, and by an independent claim 15 for the mobile station.

The method according to the present invention offers a benefit by avoiding to signal a full description of the transmission channel characteristic from the mobile station to the base station. One indication of a system description, which approximates the real transmission channel characteristic, is sufficient for the feedback information. More than one indication can be used in the feedback information to further improve the selection of the pre-coding vector.

Another advantage is the possibility to predict transmission efficiencies at the base station for a larger number of pre-coding vectors than in the prior art. In the prior art with restricted feedback information, the base station receives feedback information only about the best pre-coding vector, the best companion pre-coding vector or a very limited number of pre-coding vectors.

In a preferred embodiment of the invention, only that mobile stations and pre-coding vectors are chosen which provide a utility value being above a first predefined threshold. Therewith a higher spectral efficiency and a larger overall data throughput can be achieved for a same or even smaller feedback data rate in comparison to the prior art, when data are transmitted simultaneously using different pre-coding vectors to at least two mobile stations.

In a further preferred embodiment of the invention, a normalized system description is used. This allows limiting the number of system descriptions in the radio communication system. In that case, at least one adaptation parameter value between the normalized system description and the transmission channel characteristic is calculated at the mobile station and the feedback information further comprises a second component providing the at least one adaptation parameter value.

In an additionally preferred embodiment of the invention, approximation errors between first utility values of several of the system descriptions and second utility values of the transmission channel characteristic are calculated for several combinations of pre-coding vectors. This allows for selecting one of the system descriptions with an approximation error value below a second predefined threshold.

In a first alternative, the approximation error value can be reported as a third component of the feedback information from the mobile station to the base station.

In a second alternative, the approximation error value can be used to adjust the adaptation value. This offers the benefit to avoid reporting the approximation error value. In this further preferred embodiment, only an adjusted adaptation value together with the indication for the system description is reported from the mobile station to the base station to limit the feedback information.

Both alternatives provide the advantage, that the approximation error value is used to perform a corrected calculation within the decision algorithm at the base station for selecting a more suitable pre-coding vector.

Further advantageous features of the invention are defined by dependent claims for the method.

### BRIEF DESCRIPTION OF THE DRAWINGS

The embodiments of the invention will become apparent in the following detailed description and will be illustrated by accompanying drawings given by way of non-limiting illustrations.

Figure 1 shows a block diagram of a radio communication network for performing a method in accordance to a first, a second, a third, a fourth, and a fifth embodiment of the invention.

Figure 2 shows a flow diagram of the method in accordance to the first embodiment of the invention.

Figure 3 shows a flow diagram of the method in accordance to the second embodiment of the invention.

Figure 4 shows a block diagram of a sector of a radio cell for a first application of the invention.

Figure 5 shows a flow diagram of the method in accordance to the third embodiment of the invention.

Figure 6 shows a flow diagram of the method in accordance to the fourth embodiment of the invention.

Figure 7 shows a flow diagram of the method in accordance to the fifth embodiment of the invention.

Figure 8 shows a block diagram of a base station for performing the method in accordance to the first, the second, the third, the fourth, and the fifth embodiment of the invention.

Figure 9 shows a block diagram of a mobile station for performing the method in accordance to the first, the second, the third, the fourth, and the fifth embodiment of the invention.

### DETAILED DESCRIPTION OF THE INVENTION

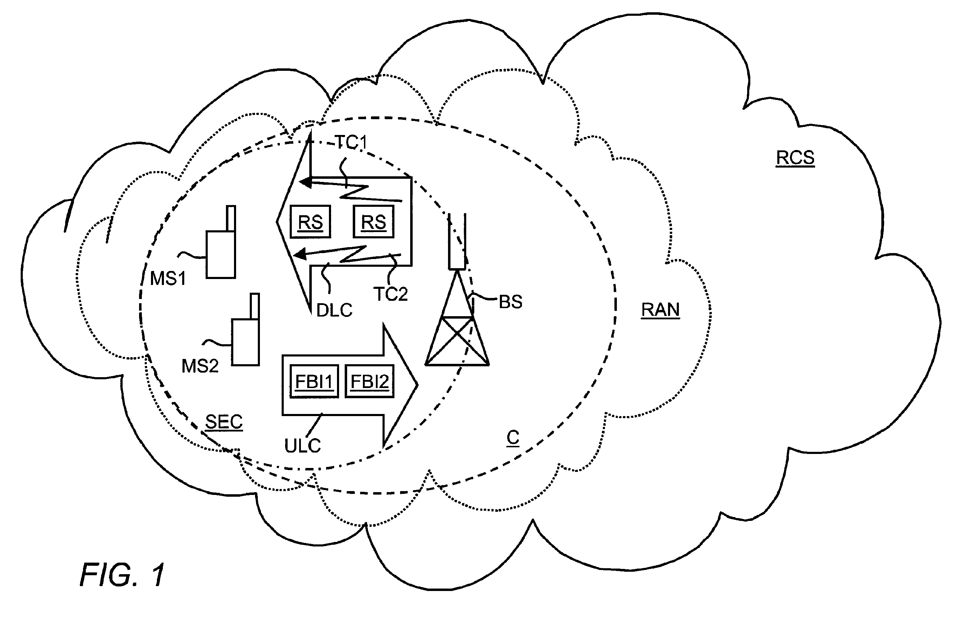

Referring to Figure 1 a radio communication system RCS contains a radio access network RAN.

The radio access network RAN contains a radio cell C. The radio cell C contains a base station BS and a sector SEC.

Alternatively, the radio cell C is not fragmented in different sectors.

The sector SEC contains a first mobile station MS1 and a second mobile station MS2.

The base station BS comprises an antenna system with at least two antenna elements. The mobile stations MS1, MS2 comprise each an antenna system with one antenna element. Therefore, the downlink channel DLC between the base station BS and the mobile stations MS1, MS2 is a MISO channel (MISO = multiple input single output).

Alternatively, a MIMO channel (MIMO = multiple input multiple output) can be used, if the mobile stations MS1, MS2 comprise an antenna system with at least two antenna elements.

Further radio cells of the radio access network RAN, further sectors of the radio cell C and further mobile stations of the sector SEC are not shown for simplification.

User and signalling data are exchanged between the base station BS and the first and second mobile station MS1, MS2 via a downlink channel DLC and an uplink channel ULC.

The data exchange is preferably performed by an OFDMA transmission technique.

Alternatively other transmission techniques like e.g. TDMA can be used.

The base station BS transmits reference signals RS via the downlink channel DCL.

The reference signals RS of the downlink channel DLC being received at the mobile station MS1, MS2 have travelled different transmission paths between the base station BS and the mobile station MS1, MS2. The different transmission paths between the base station BS and the first mobile station MS1 add up to a first transmission channel TC1. In a same way, the different transmission paths between the base station BS and the second mobile station MS2 add up to a second transmission channel TC2. Feedback information FBI1, FB12 indicating a system description approximating characteristics of the transmission channels TC1, TC2 are sent from the mobile stations MS1, MS2 via the uplink channel ULC to the base station BS.

The system description can be a pre-defined test channel description, an averaged channel estimation obtained by measurements over a longer time period, or a combination of differently weighted pre-coding vectors of a codebook, which is known at the base station BS and at the mobile stations MS1, MS2.

The base station BS selects pre-coding vectors for the mobile stations MS1, MS2 based on the feedback information FBI1, FB12.

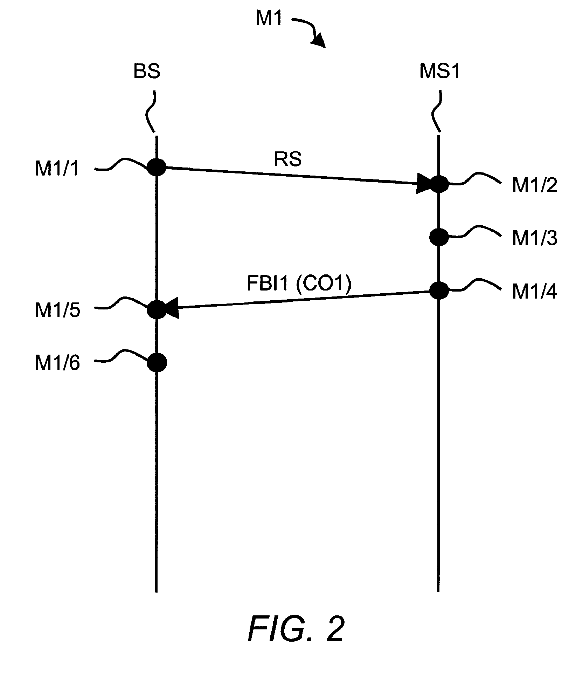

Referring to Figure 2 a flow diagram of a method M1 in accordance to the first embodiment of the invention is shown.

In a first step M1/1 the base station BS transmits the reference signals RS for example periodically via the first antenna element AE1 and the second antenna element AE2, whereas the reference signals RS are transmitted for example unweighted, e.g. with a same amplitude, unvarying for both antenna elements AE1, AE2, e.g. with a constant amplitude, and orthogonal for both antenna elements AE1, AE2. The orthogonality of the first reference signals RS can be achieved for example by using different codes or different frequencies or different transmission times on both antenna elements AE1, AE2. Candidates for the reference signals RS are for example common pilots as being used in the OFDMA transmission technique for 3GPP LTE systems.

In a next step M1/2 the first mobile station MS1 receives the reference signals RS.

In a further step M1/3 the first mobile station MS1 determines the first feedback information FBI1.

The first feedback information FBI1 can be determined on the granularity of the whole frequency range of the downlink channel DLC as an lower limit, of a resource block comprising a part of the whole frequency range of the downlink channel DLC, or of a frequency sub-carrier as an upper limit. The chosen granularity depends on the calculating capacities in the first mobile station MS1 and the base station BS and on the capacity of the uplink channel for feedback information.

In the following, the first feedback information FBI1 is determined on the granularity of a resource block, which comprises a set of sub-carriers as described above.

The determination of the first feedback information FBI1 comprises several sub-steps:

In a first sub-step, the first mobile station MS1 calculates for a resource block a first utility value based for example on an SINR value (SINR = signal-to-interference-and-noise-ratio) for a combination of a subset of pre-coding vectors based on a knowledge of a transmission characteristic of the reference signals RS at the base station BS and based on a knowledge of a reception characteristic of the reference signals RS at the first mobile station MS1.

Utility values are for example overall data rates of the downlink channel DLC for a specific combination of pre-coding vectors and mobile stations. As an alternative, the utility values can include fairness values, which comprise overall data rates of the downlink channel DLC and dedicated data rates of the mobile stations MS1, MS2 for a specific combination of pre-coding vectors and mobile stations.

In a further alternative, the utility values can be QoS values (QoS = quality of service), which comprise overall data rates of the downlink channel DLC for a specific combination of pre-coding vectors and mobile stations, dedicated data rates of the mobile stations MS1, MS2 for the specific combination of pre-coding vectors and mobile stations and QoS parameters of services of the mobile stations MS1, MS2.

A combination is either given by one pre-coding vector to be used for the first mobile station MS1 for scheduling data and no other pre-coding vector to be used for other mobile stations. Or the combination is given by the pre-coding vector to be used for the first mobile station MS1 for scheduling data and at least a further pre-coding vector to be used for another mobile station. In the first case, there will be no interference by other pre-coding vectors. In the second case, the at least further pre-coding vector will generate interference to the pre-coding vector to be used for the first mobile station MS1.

Only a subset of pre-coding vectors can be used for the combinations if for example a beam distance method is used in the radio communication system RCS. If only a subset of pre-coding vectors is used, then the subset must be known at the base station BS and the first mobile station MS1. If the beam distance method is used, the beam distance criterion must be known additionally at the first mobile station MS1.

In an alternative, the calculation of the first utility value can be based on an SIR value (SIR = signal-to-interference-ratio).

If no OFDMA transmission technique is used, in a further alternative for a transmission system with different parallel channels from the base station to the first mobile station MS1 instead of the OFDM sub-carriers different time slots of a TDMA transmission technique can be used.

In a second sub-step, the first mobile station MS1 calculates for the same resource block and for the same combination of pre-coding vectors a second utility value based on a system description.

The first and the second sub-step are repeated for all resource blocks, for all combinations of the subset of pre-coding vectors, and for a subset of system descriptions.

In an alternative, the first and the second sub-step can be repeated for all combinations of all pre-coding vectors of the codebook.

Only a subset of system descriptions are used in the calculations, if for example some of the system descriptions can be seen by a pre-estimation to be improper for approximating the characteristic of the first transmission channel TC1.

In a further alternative, the first and the second sub-step are repeated for all system descriptions known at the first mobile station MS1 and the base station BS.

The combinations of the subset of pre-coding vectors, which must be used in the first and the second sub-step at the first mobile station MS1 can be signalled from the base station BS to the first mobile station MS1, when for example the first mobile station MS1 enters the cell C or the sector SEC.

In a third sub-step the first mobile station MS1 compares the first utility values calculated in the first sub-steps with the second utility values calculated in the second sub-steps for the same resource blocks and for the same combinations of pre-coding vectors.

In a fourth sub-step, the first mobile station MS1 selects one of the system descriptions providing a best match in utility and outputs an indication of that system description as a first component CO1 in the first feedback information FBI1.

In an alternative, at least a second indication for a second system description can be output, if there are at least two system descriptions providing nearly the same smallest difference.

In a next step M1/4 the first mobile station MS1 transmits the first feedback information FBI1 to the base station BS.

In a further step M1/5 the base station BS receives the first feedback information FBI1.

In a next step M1/6 the base station BS selects a first pre-coding vector for the first mobile station MS1 based on the first feedback information FBI1. The selection of the first pre-coding vector comprises several sub-steps:

In a fifth sub-step, the base station BS calculates a third utility value based on the indicated system description for one of the combinations of pre-coding vectors.

If for example only the first mobile station MS1 needs to be scheduled, the fifth sub-step is repeated only for that combinations of pre-coding vectors, which comprise only one pre-coding vector. If for example the codebook comprises eight pre-coding vectors and the combinations should be based on all pre-coding vectors, than the fifth sub-step must be repeated eight times.

In a sixth sub-step the base station BS1 selects one of the pre-coding vectors for the first mobile station MS1. In the prior art, the base station BS would normally select the pre-coding vector, which is indicated in the feedback information to the base station BS. In the invention, instead of a specific pre-coding vector a system description is indicated to the base station BS. Therefore, the base station BS must estimate from the indicated system description, which one of the pre-coding vectors is suitable for the first mobile station MS1. If only the first mobile station MS1 needs to be scheduled in the sector SEC, the estimation can be done via the calculated combinations, in which only one pre-coding vector is present. A pre-coding vector of that combination is selected, which fulfils a pre-defined criterion. The pre-defined criterion is for example a first pre-defined threshold for the calculated third utility values.

The first pre-defined threshold is for example determined by the base station BS in such a way that only one of the calculated data rates is equal or above the first pre-defined threshold.

As an alternative the first pre-defined threshold is determined that several of the calculated data rates are above the first pre-defined threshold.

The number of the steps and sub-steps for performing the method M1 is not critical, and as can be understood by those skilled in the art, that the number of the steps and sub-steps may vary without departing from the scope of the invention.

The method according to the first embodiment of the invention offers a first advantage by transmitting in the first feedback information only an indication of a system description, which approximates the real transmission channel characteristic and thereby avoids transmitting a full description of the transmission channel characteristic from the first mobile station MS1 to the base station BS.

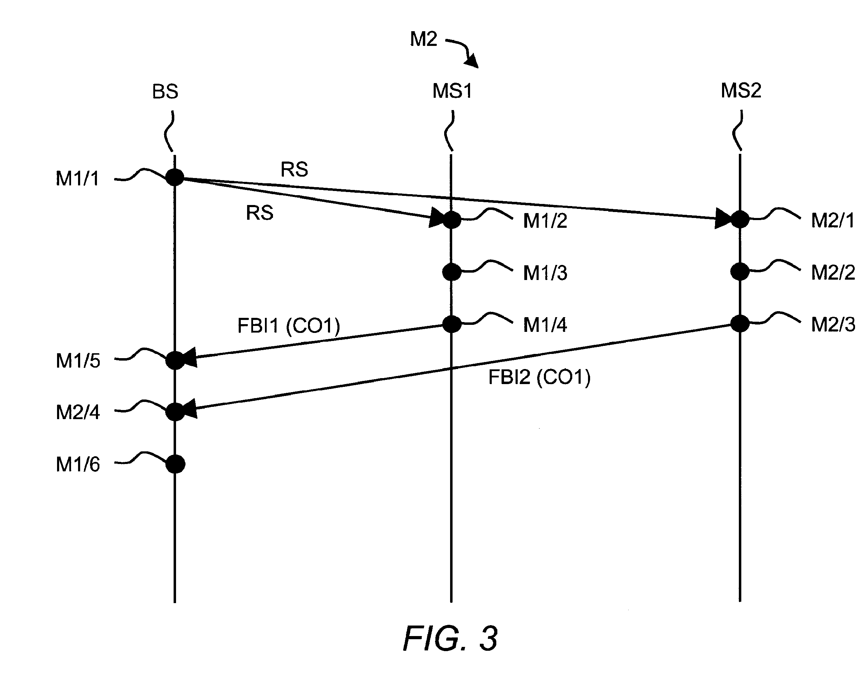

Another advantage is the possibility at the base station BS to evaluate the transmission channel characteristic for a number of pre-coding vectors or all pre-coding vectors of the codebook. As mentioned above, a reasonable selection in the prior art is restricted to the single pre-coding vector or to the small number of pre-coding vectors indicated in the feedback information. Referring to Figure 3 a flow diagram of a method M2 in accordance to a second embodiment of the invention is shown. In addition to the steps M1/1, M1/2, M1/3, M1/4, M1/5, and M1/6 performed in the first embodiment of the invention, in the method M2 steps M2/1, M2/2, and M2/3 are performed by the second mobile station MS2 in parallel to the steps M1/2, M1/3, and M1/4 performed by the first mobile station MS1. The step M2/1 is performed in a same way by the second mobile station MS2 as the step M1 /2.

The further step M2/2 is performed in a similar way by the second mobile station MS2 as the step M1 /3.

The next step M2/3 is performed in a same way by the second mobile station MS2 as the step M1 /4.

The further step M2/4 is performed in a same way by the base station BS as the step M1/5.

In comparison to the method M1, for the method M2 the fifth sub-step of the step M1/6 is repeated for that combinations of pre-coding vectors, which comprise one pre-coding vector or two pre-coding vectors. If for example the codebook comprises eight pre-coding vectors and the combinations should be based on all pre-coding vectors, than the fifth sub-step must be repeated 72 times for the method M2. 8 times one of the pre-coding vectors is allocated to the first mobile station MS1 and no pre-coding vector is allocated to the second mobile station MS2, 8 times one of the pre-coding vectors is allocated to the second mobile station MS2 and no pre-coding vector is allocated to the first mobile station MS1, and 56 times one of the pre-coding vectors is allocated to the first mobile station MS1 and another one of pre-coding vectors is allocated to the second mobile station MS2.

For calculating the third utility value of a combination with the first and the second pre-coding vector the base station BS assumes that first data are transmitted with the first pre-coding vector to the first mobile station MS1 simultaneously with second data being transmitted with a second pre-coding vector to the second mobile station MS2.

The sequence and the number of the steps for performing the method M2 is not critical, and as can be understood by those skilled in the art, that the sequence and the number of the steps may vary without departing from the scope of the invention.

By transmitting at least one indication for a second system description from at least the second mobile station MS2 to the base station BS, the base station BS is able to calculate utility values (e.g. overall data rates of the downlink channel DLC) for a number of combinations of mobile stations and pre-coding vectors. In case of overall data rates, the base station BS selects such a combination of mobile stations and pre-coding vectors, which provides for example a maximum overall data rate. Thereby, the spectral efficiency of the downlink channel DLC is increased.

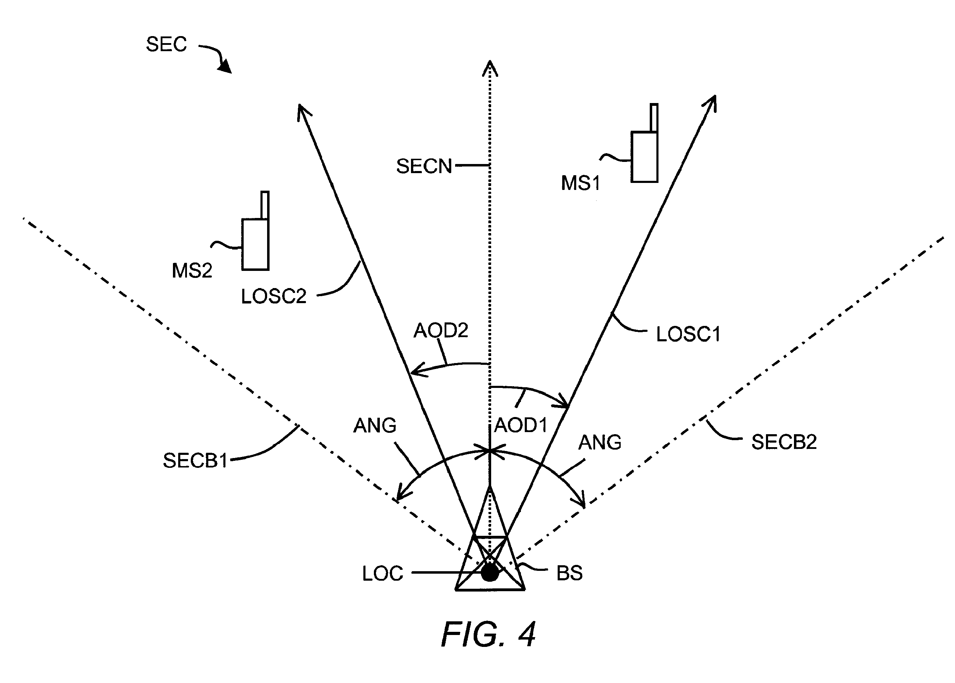

Referring to Figure 4 according to a first application of the invention, a block diagram of the sector SEC in an LOS dominated scenario (LOS = line-of-sight) is shown. LOS dominated scenario means that the dominated path from the base station BS to the mobile station MS1, MS2 is a direct line of sight channel.

The sector SEC is confined at ground level by a first and a second sector border SECB1 and SECB2. The first and the second sector border SECB1 and SECB2 intersect each other at a location LOC of the base station BS.

A sector normal SECN at ground level is equally spaced between the first and the second sector border SECB1, SECB2 by an angle ANG between the sector normal SECN and the first and the second sector border SECB1, SECB2.

In the following, pre-defined test channel descriptions are used for the system descriptions.

The test channel descriptions are used for the first and the second mobile station MS1, MS2 in the sector SEC.

In an alternative a first set of test channel descriptions is used for the first mobile station MS1 and a second set of test channel descriptions is used for the second mobile station MS2.

The test channel descriptions are for example LOS channels. A first LOS channel LOSC1 is located between the sector normal SECN and the second sector border SECB2. A second LOS channel LOSC2 is located between the sector normal SECN and the first sector border SECB1.

The first LOS channel LOSC1 is given by a first AOD (AOD = angle of departure) AOD1. The second LOS channel LOSC2 is given by a second AOD (AOD = angle of departure) AOD2.

The first LOS channel LOSC1 is directed to the first mobile station MS1 and the second LOS channel LOSC2 is directed to the second mobile station MS2. According to the first application of the invention, the first mobile station MS1 determines that the first LOS channel LOSC1 approximates the characteristic of the transmission channel between the base station BS and the first mobile station MS1 and transmits a first indication for the first LOS channel LOSC1 to the base station BS. Similarly, the second mobile station MS2 determines that the second LOS channel LOSC2 approximates the characteristic of the transmission channel between the base station BS and the second mobile station MS2 and transmits a second indication for the second LOS channel LOSC2 to the base station BS.

In principle, transmission channel characteristics for a large number of conditions for the transmission channel between a base station and a mobile station can be defined. But due to restricted memory capacities and manufacturing costs and due to a reasonable restriction of the number of bits used for the indication in the feedback information it is favourable to use only a limited number of normalized system descriptions in the sector SEC.

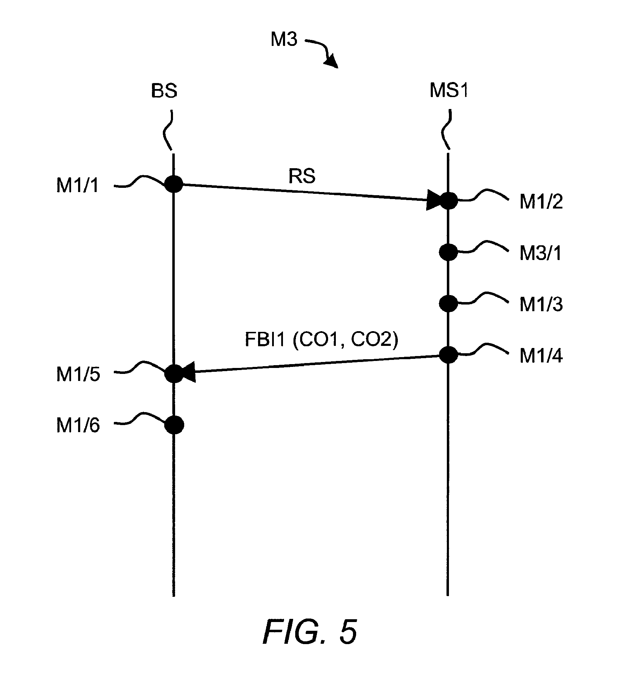

Referring to Figure 5 a flow diagram of a method M3 in accordance to the third embodiment of the invention is shown. In addition to the steps M1/1, M1/2, M1/3, M1/4, M1/5, and M1/6 performed in the first embodiment of the invention, in the method M3 step M3/1 is performed between the steps M1/2 and M1/3.

In the step M3/1, the first mobile station MS1 calculates a value of an adaptation parameter between a normalized system description and the characteristic of the first transmission channel TC1.

In an alternative, the first mobile station MS1 calculates a value of an adaptation parameter between a normalized system description and the characteristic of the first transmission channel TC1 for each antenna element of an antenna system of the first mobile station MS1.

The calculation of the value of the adaptation parameter is required, because a normalized system description fitting best to the characteristic of the transmission channel TC1 is not taking into account the attenuation of signals, an interference level due to inter-sector interference, and a noise level due to external noise sources.

In case of using test channel descriptions for the system descriptions, the adaptation parameter is for example a noise power for adapting a first power level of the test channel description to a second power level of the characteristic of the first transmission channel TC1. The noise power is obtained from a ratio between a reception power level of the downlink channel DLC, an inter-sector interference power level and a power level of the external noise sources.

Due to calculation requirements for the noise power normally an AWGN power (AWGN = additive white Gaussian noise) is used.

In the step M1/3 the first mobile station MS1 determines in comparison to the method M1 the first feedback information FBI1 with the first component CO1 and in addition with a second component CO2 providing the value of the adaptation parameter.

In the step M1/4 the first mobile station MS1 transmits in comparison to the method M1 the first feedback information FBI1 with the first component CO1 and in addition with the second component CO2 to the base station BS.

In an alternative, the first mobile station MS1 transmits in the step M1/4 a value of an adaptation parameter for each antenna element of the antenna system of the first mobile station MS1.

The sequence and the number of the steps for performing the method M3 is not critical, and as can be understood by those skilled in the art, that the sequence and the number of the steps may vary without departing from the scope of the invention.

As mentioned above, a reasonable restriction of system descriptions to normalized system descriptions reduces a resource consumption in the first mobile station MS1, the base station BS, and in the first feedback information FBI1.

To select the first pre-coding vector for the first mobile station MS1 in a more reliable way to the characteristics of the first transmission channel

TC1 between the base station BS and the first mobile station MS1 it is favourable to determine an approximation error between one of the system descriptions indicated in the first feedback information FBI1 and the characteristics of the first transmission channel TC1. Moreover a more suitable modulation and coding scheme can be selected.

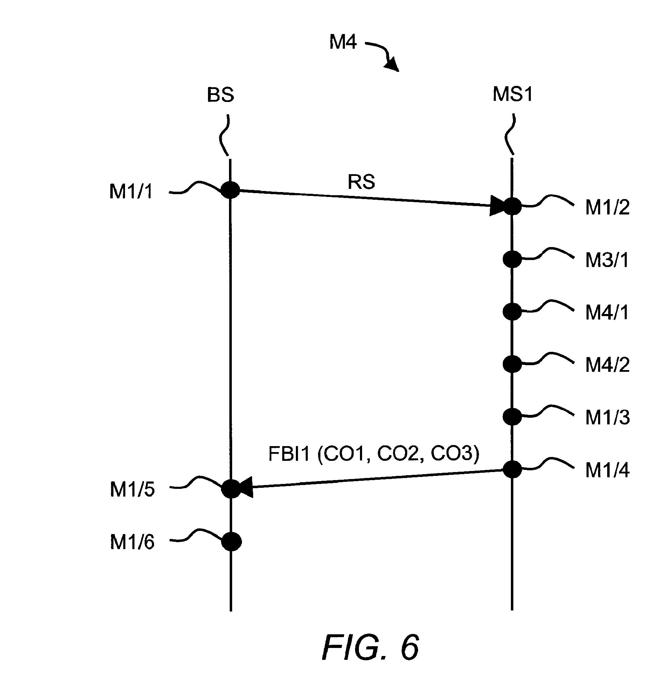

Referring to Figure 6 a flow diagram of a method M4 in accordance to the fourth embodiment of the invention is shown. In addition to the steps M1/1 to M1/6 and the step M3/1 performed according to the third embodiment of the invention, steps M4/1 and M4/2 are performed between the step M3/1 and the step M1/3.

In the step M4/1, the first mobile station MS1 calculates an approximation error between a first utility value of the system description and a second utility value of the characteristic of the first transmission channel TC1 for a combination of the subset of pre-coding vectors of the codebook.

As mentioned above, overall data rates are used exemplarily for the utility values. Therefore, for the first utility value a first data rate and for the second utility value a second data rate is used. The first data rate is a first function of a combination of pre-coding vectors of the codebook and of parameters of the system description. The second data rate is a second function of a combination of the same pre-coding vectors as for the first data rate, of the reference signals RS received by the first mobile station MS1 and of an estimated average noise power.

The step M1/4 is repeated for all system descriptions of the subset of system descriptions and for all combinations of the subset of pre-coding vectors.

In the step M4/2, the first mobile station MS1 determines an approximation error of the calculated approximation errors with a second value below a second pre-defined threshold.

The second pre-defined threshold is for example determined by the first mobile station MS1 in such a way that only one of the calculated approximation errors is equal or below the second pre-defined threshold. As an alternative the second pre-defined threshold is determined that several of the calculated approximation errors are below the second predefined threshold.

In the step M1/3 the first mobile station MS1 determines in comparison to the method M1 the first feedback information FBI1 with the first component CO1, with the second component CO2, and in addition with a third component C03 providing the approximation error.

In the step M1/4 the first mobile station MS1 transmits in comparison to the method M1 the first feedback information FBI1 with the first component CO1, with the second component, and in addition with the second component CO3 to the base station BS.

The sequence and the number of the steps for performing the method M4 is not critical, and as can be understood by those skilled in the art, that the sequence and the number of the steps may vary without departing from the scope of the invention. Especially, the step M3/1 and the transmission of the second component CO2 in the first feedback information FBI1 is not required, if no normalized system descriptions are used.

By calculating the approximation error at the first mobile station MS1 and transmitting the approximation error to the base station BS, the base station BS is able to incorporate the approximation error in the decision algorithm for selecting a more reliable pre-coding vector and a more adequate modulation and coding scheme.

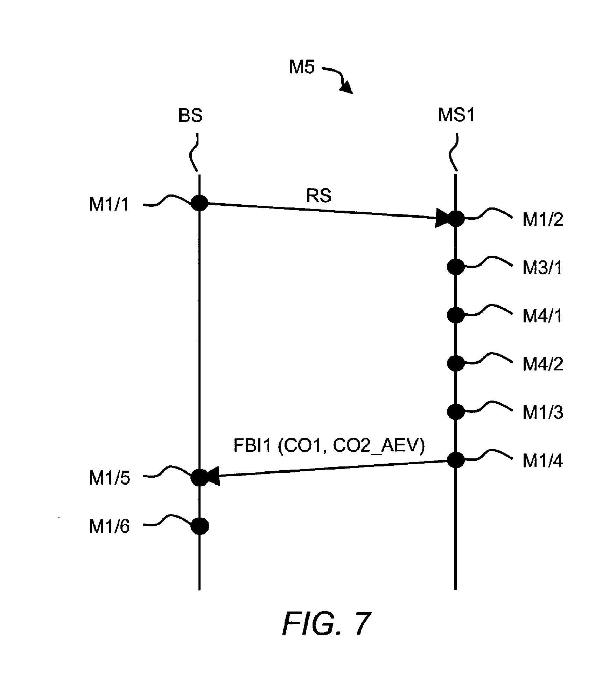

Referring to Figure 7 a flow diagram of a method M5 in accordance to the fifth embodiment of the invention is shown. In comparison to the steps

M1/1 to M1/6, the step M3/1, and the steps M4/1 and M4/2 performed according to the fourth embodiment of the invention, in the step M1/3 the first mobile station MS1 determines the first feedback information FBI1 with the first component CO1 and with a second component CO2_AEV providing the value of the adaptation parameter, which further depends on the approximation error value.

Using the noise power as the adaptation parameter, the approximation error can be taken into account by increasing the noise power to an adequate power level.

The sequence and the number of the steps for performing the method M5 is not critical, and as can be understood by those skilled in the art, that the sequence and the number of the steps may vary without departing from the scope of the invention.

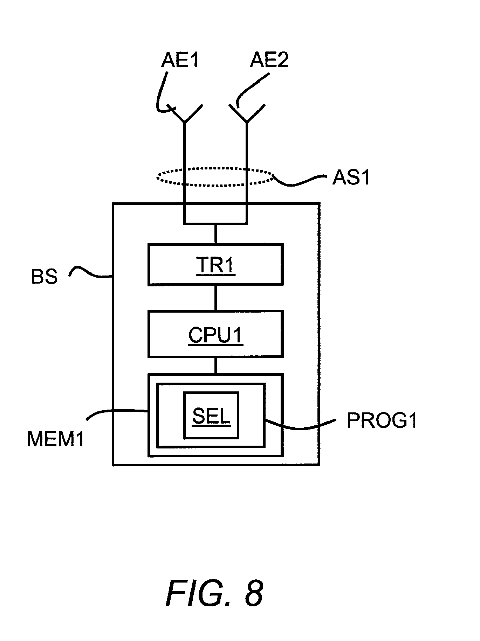

The advantage of the combination of the value of the adaptation parameter and the approximation error value into a single value of the second component CO2_AEV is the reduction of feedback information in the uplink channel ULC by omitting the third component CO3 and transmitting only the two components CO1, CO2_AEV in the first feedback information FBI1. Referring to Figure 8 the base station BS of Figure 1 contains an antenna system AS1, a transceiver TR1, a CPU (CPU = central processing unit) CPU1, and a computer readable medium MEM1.

The antenna system AS1 contains a first antenna element AE1 and a second antenna element AE2. Alternatively, the first antenna system AS1 can contain more than two antenna elements or any kind of multi-antenna system known in the art.

The transceiver TR1 transmits the reference signals RS and receives the first and second feedback information FBI1, FBI2 comprising the first component CO1 indicating the system description approximating the characteristic of the transmission channel TC1, TC2 between the base station BS and the mobile station MS1, MS2 via the antenna system AS1. The computer readable medium MEM1 is foreseen for storing a computer readable program PROG1, a codebook comprising a set of pre-coding vectors, and a set of system descriptions.

The codebook and the set of system descriptions can be configured locally during initial operation or can be remotely configured for example by a network element as for example an operation and maintenance centre.

The computer readable program PROG1 is foreseen for executing steps of the method according to the first (see Figure 2), the second (see Figure 3), the third (see Figure 5), the fourth (see Figure 6), and/or the fifth (see Figure 7) embodiment of the invention.

In particular, the computer readable program PROG1 comprises means for selecting a pre-coding vector for the mobile stations MS1, MS2 based on the feedback information FBI1, FBI2.

The CPU CPU1 is foreseen for executing the computer readable program PROG1.

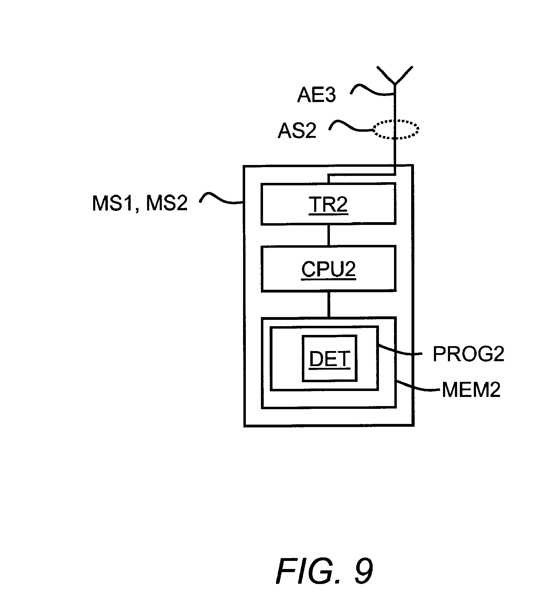

Referring to Figure 9 the mobile station MS1, MS2 of Figure 1 contains an antenna system AS2, a transceiver TR2, a CPU CPU2, and a computer readable medium MEM2.

The antenna system AS2 contains an antenna element AE3. Alternatively, the antenna system AS2 can contain more than one antenna element.

The transceiver TR2 receives the reference signals RS and transmits the feedback information FBI1, FB12 via the antenna system AS2.

The computer readable medium MEM2 is foreseen for storing a computer readable program PROG2, the codebook comprising the set of pre-coding vectors, and the set of system descriptions.

The codebook and the set of system descriptions can be configured for example by a base station, when the mobile station MS1, MS2 enters a cell of the base station.

The computer readable program PROG2 is foreseen for executing steps of the method according to the first (see Figure 2), the second (see Figure 3), the third (see Figure 5), the fourth (see Figure 7), and/or the fifth (see Figure 7) embodiment of the invention.

In particular, the computer readable program PROG2 comprises means for determining the feedback information FBI1, FBI2 comprising the first component CO1 indicating a system description approximating a characteristic of a transmission channel TC1, TC2 between the base station BS and the mobile station MS1, MS2.

The CPU CPU2 is foreseen for executing the computer readable program PROG2.

## Claims

1. A method for resource allocation in a radio communication system (RCS), said radio communication system (RCS) comprising a base station (BS) and at least one mobile station (MS1, MS2), said base station (BS) comprising a first antenna system (AS1) with at least two antenna elements (AE1, AE2), said base station (BS) and said at least one mobile station (MS1, MS2) comprising a codebook, said method comprising the steps of:
- transmitting (M1/1) reference signals (RS) from said base station (BS) to said at least one mobile station (MS1, MS2),
- and determining (M1/3) first feedback information (FBI1, FBI2) by said at least one mobile station (MS1, MS2); said method being further
**characterized in that** said feedback information (FBI1, FBI2) comprises a first component (CO1) indicating at least one system description approximating a characteristic of a transmission channel (TC1, TC2) between said base station (BS) and said at least one mobile station (MS1, MS2) and wherein said method further comprises the step of selecting (M1/6) at said base station (BS) a first pre-coding vector of said codebook for said at least one mobile station (MS1, MS2) based on said first feedback information (FBI1, FBI2).

2. The method according to claim 1, wherein said radio communication system (RCS) is an OFDMA radio communication system.

3. The method according to claim 1, wherein said radio communication system (RCS) comprises at least one further mobile station (MS1, MS2), wherein said method further comprises the step of:
- determining (M2/2) at least second feedback information (FBI1, FBI2) by said at least further mobile station (MS1, MS2) and wherein said selecting (M1/6) of said first pre-coding vector is further based on said at least second feedback information (FBI1, FB12) and based on utility values calculated for combinations of mobile stations (MS1, MS2) and pre-coding vectors, wherein several of said utility values are obtained, when transmitting for several of said combinations of mobile stations (MS1, MS2) and pre-coding vectors simultaneously first data with said first pre-coding vector to said at least one mobile station (MS1, MS2) and second data with a second pre-coding vector of said codebook to said at least further mobile station (MS1, MS2).

4. The method according to claim 1, wherein said base station (BS) and said at least one mobile station (MS1, MS2) comprise a set of at least two test channel descriptions and wherein said system description is one of said test channel descriptions.

5. The method according to claim 4, wherein said at least two test channel descriptions are at least two line of sight channels (LOSC1, LOSC2), and wherein a first one (LOSC1) of said at least two line of sight channels (LOSC1, LOSC2) is identified by a first angle of departure (AOD1) and a second one (LOSC2) of said at least two line of sight channels (LOSC1, LOSC2) is identified by a second angle of departure (AOD2).

6. The method according to claim 1, wherein said system description is a normalized system description and wherein said method further comprises the step of calculating (M3/1) at least one value of an adaptation parameter between said normalized system description and said characteristic of said transmission channel (TC1, TC2) at said at least one mobile station (MS1, MS2) and wherein said feedback information (FBI1, FBI2) further comprises a second component (CO2) providing said at least one value of said adaptation parameter.

7. The method according to claim 4 and claim 6, wherein said adaptation parameter is a noise power for adapting a first power level of said test channel description to a second power level of said characteristic of said transmission channel (TC1, TC2).

8. The method according to claim 7, wherein said noise power is an additive white Gaussian noise power.

9. The method according to claim 1, wherein said mobile station (MS1, MS2) comprises a set of system descriptions and wherein said method further comprises the steps of:
- calculating (4/1) approximation errors between first utility values of said characteristic of said transmission channel (TC1, TC2) and second utility values of several of said system descriptions for several combinations of pre-coding vectors of said codebook,
- and determining (4/2) an approximation error of said approximation errors with a second value below a second predefined threshold.

10. The method according to claim 9, wherein said feedback information (FBI1, FBI2) further comprises a third component (CO3) providing said approximation error value.

11. The method according to claim 6 and claim 9, wherein said value of said adaptation parameter further depends on said approximation error value.

12. The method according to claim 9, wherein said first utility value is a first data rate and said second utility value is a second data rate and wherein said first data rate is a first function of a combination of pre-coding vectors of said codebook, of said reference signals (RS) received by said at least one mobile station (MS1, MS2) and of an estimated average noise power and said second data rate is a second function of said combination of pre-coding vectors and of parameters of said system description.

13. A radio communication system (RCS), said radio communication system (RCS) comprising a base station (BS) and at least one mobile station (MS1), said base station (BS) comprising a first antenna system (AS1) with at least two antenna elements (AE1, AE2), said base station (BS) and said at least one mobile station (MS1, MS2) comprising a codebook, said base station (BS) being adapted to allocate resources in said radio communication system (RCS), said radio communication system (RCS) comprising:
- means (TR1) for transmitting reference signals (RS) from said base station (BS) to said at least one mobile station (MS1, MS2),
- and means (DET) for determining feedback information (FBI1, FBI2) by said at least one mobile station (MS1, MS2); said radio communication system (RCS) being further
**characterized in that** said feedback information (FBI1, FBI2) comprises a first component (CO1) indicating at least one system description approximating a characteristic of a transmission channel (TC1, TC2) between said base station (BS) and said at least one mobile station (MS1, MS2) and wherein said radio communication system
(RCS) further comprises means (SEL) for selecting at said base station (BS) a first pre-coding vector of said codebook for said at least one mobile station (MS1, MS2) based on said feedback information (FBI1, FBI2).

14. A base station (BS), said base station (BS) being adapted to allocate resources in a radio communication system (RCS), said base station (BS) comprising a first antenna system (AS1) with at least two antenna elements (AE1, AE2) and a codebook, said base station (BS) comprising:
- means (TR1) for transmitting reference signals (RS),
- and means (TR1) for receiving a feedback information (FBI1, FBI2); said base station (BS) being further
**characterized in that** said feedback information (FBI1, FBI2) comprises a first component (CO1) indicating at least one system description approximating a characteristic of a transmission channel (TC1, TC2) between said base station (BS) and said at least one mobile station (MS1) and wherein said base station (BS) further comprises means (SEL) for selecting a first pre-coding vector of said codebook for at least one mobile station (MS1, MS2) based on said feedback information (FBI1, FBI2).

15. A mobile station (MS1, MS2), said mobile station (MS1, MS2) comprising a codebook, said mobile station (MS1, MS2) comprising:
- means (TR2) for receiving reference signals (RS),
- and means (DET) for determining feedback information (FBI1, FBI2); said mobile station (MS1, MS2) being further
**characterized in that** said feedback information (FBI1, FBI2) comprises a first component (CO1) indicating at least one system description approximating a characteristic of a transmission channel (TC1, TC2) between a base station (BS) and said mobile station (MS1, MS2).

## Amended claims

### Amended claims in accordance with Rule 137(2) EPC.

**1.** A method for resource allocation in a radio communication system (RCS), said radio communication system (RCS) comprising a base station (BS) and at least one mobile station (MS1, MS2), said base station (BS) comprising a first antenna system (AS1) with at least two antenna elements (AE1, AE2), said base station (BS) and said at least one mobile station (MS1, MS2) comprising a codebook and a set of system descriptions, said method comprising the steps of:
- transmitting (M1/1) reference signals (RS) from said base station (BS) to said at least one mobile station (MS1, MS2),
- determining (M1/3) first feedback information (FBI1, FBI2) by said at least one mobile station (MS1, MS2) comprising a first component (CO1) indicating at least one system description, and
- selecting (M1/6) at said base station (BS) a first pre-coding vector of said codebook for said at least one mobile station (MS1, MS2) based on said first feedback information (FBI1, FB12),
**characterized in that** said method further comprising the steps of:
- calculating (M4/1) approximation errors between first utility values of a characteristic of a transmission channel (TC1, TC2) between said base station (BS) and said at least one mobile station (MS1, MS2) and second utility values of several of said system descriptions for several combinations of pre-coding vectors of said codebook,
- and determining (M4/2) an approximation error of said approximation errors with a second value below a second predefined threshold and said at least one system description approximating said characteristic of said transmission channel (TC1, TC2) between said base station (BS) and said at least one mobile station (MS1, MS2).

**2.** The method according to claim 1, wherein said radio communication system (RCS) is an OFDMA radio communication system.

**3.** The method according to claim 1, wherein said radio communication system (RCS) comprises at least one further mobile station (MS1, MS2), wherein said method further comprises the step of:
- determining (M2/2) at least second feedback information (FBI1, FBI2) by said at least further mobile station (MS1, MS2) and wherein said selecting (M1/6) of said first pre-coding vector is further based on said at least second feedback information (FBI1, FB12) and based on utility values calculated for combinations of mobile stations (MS1, MS2) and pre-coding vectors, wherein several of said utility values are obtained, when transmitting for several of said combinations of mobile stations (MS1, MS2) and pre-coding vectors simultaneously first data with said first pre-coding vector to said at least one mobile station (MS1, MS2) and second data with a second pre-coding vector of said codebook to said at least further mobile station (MS1, MS2).

**4.** The method according to claim 1, wherein said base station (BS) and said at least one mobile station (MS1, MS2) comprise a set of at least two test channel descriptions and wherein said system description is one of said test channel descriptions.

**5.** The method according to claim 4, wherein said at least two test channel descriptions are at least two line of sight channels (LOSC1, LOSC2), and wherein a first one (LOSC1) of said at least two line of sight channels (LOSC1, LOSC2) is identified by a first angle of departure (AOD1) and a second one (LOSC2) of said at least two line of sight channels (LOSC1, LOSC2) is identified by a second angle of departure (AOD2).

**6.** The method according to claim 1, wherein said system description is a normalized system description and wherein said method further comprises the step of calculating (M3/1) at least one value of an adaptation parameter between said normalized system description and said characteristic of said transmission channel (TC1, TC2) at said at least one mobile station (MS1, MS2) and wherein said feedback information (FBI1, FBI2) further comprises a second component (CO2) providing said at least one value of said adaptation parameter.

**7.** The method according to claim 4 and claim 6, wherein said adaptation parameter is a noise power for adapting a first power level of said test channel description to a second power level of said characteristic of said transmission channel (TC1, TC2).

**8.** The method according to claim 7, wherein said noise power is an additive white Gaussian noise power.

**9.** The method according to claim 9, wherein said feedback information (FBI1, FBI2) further comprises a third component (CO3) providing said approximation error value.

**10.** The method according to claim 6 and claim 9, wherein said value of said adaptation parameter further depends on said approximation error value.

**11.** The method according to claim 9, wherein said first utility value is a first data rate and said second utility value is a second data rate and wherein said first data rate is a first function of a combination of pre-coding vectors of said codebook, of said reference signals (RS) received by said at least one mobile station (MS1, MS2) and of an estimated average noise power and said second data rate is a second function of said combination of pre-coding vectors and of parameters of said system description.

**12.** A radio communication system (RCS), said radio communication system (RCS) comprising a base station (BS) and at least one mobile station (MS1), said base station (BS) comprising a first antenna system (AS1) with at least two antenna elements (AE1, AE2), said base station (BS) and said at least one mobile station (MS1, MS2) comprising a codebook and a set of system descriptions, said base station (BS) being adapted to allocate resources in said radio communication system (RCS), said radio communication system (RCS) comprising:
- means (TR1) for transmitting reference signals (RS) from said base station (BS) to said at least one mobile station (MS1, MS2),
- means (DET) for determining feedback information (FBI1, FBI2) by said at least one mobile station (MS1, MS2) comprising a first component (CO1) indicating at least one system description;
- and means (SEL) for selecting at said base station (BS) a first pre-coding vector of said codebook for said at least one mobile station (MS1, MS2) based on said feedback information (FBI1, FBI2)
**characterized in that** said radio communication system (RCS) further comprises:
- means for calculating approximation errors between first utility values of a characteristic of a transmission channel (TC1, TC2) between said base station (BS) and said at least one mobile station (MS1, MS2) and second utility values of several of said system descriptions for several combinations of pre-coding vectors of said codebook, and
- means for determining an approximation error of said approximation errors with a second value below a second predefined threshold and said at least one system description approximating said characteristic of said transmission channel (TC1, TC2) between said base station (BS) and said at least one mobile station (MS1, MS2).

**13.** A base station (BS), said base station (BS) being adapted to allocate resources in a radio communication system (RCS), said base station (BS) comprising a first antenna system (AS1) with at least two antenna elements (AE1, AE2) and a codebook and a set of system descriptions,
said base station (BS) comprising:
- means (TR1) for transmitting reference signals (RS),
- means (TR1) for receiving a feedback information (FBI1, FBI2) comprising a first component (CO1) indicating at least one system description, and
- means (SEL) for selecting a first pre-coding vector of said codebook for at least one mobile station (MS1, MS2) based on said feedback information (FBI1, FBI2);
**characterized in that** said at least one system description approximating a characteristic of a transmission channel (TC1, TC2) between said base station (BS) and said at least one mobile station (MS1).

**14.** A mobile station (MS1, MS2), said mobile station (MS1, MS2) comprising a codebook and a set of system descriptions, said mobile station (MS1, MS2) comprising:
- means (TR2) for receiving reference signals (RS),
- and means (DET) for determining feedback information (FBI1, FBI2) comprising a first component (CO1) indicating at least one system description;
**characterised in that** said mobile station (MS1, MS2) further comprises:
- means for calculating approximation errors between first utility values of a characteristic of a transmission channel (TC1, TC2) between a base station (BS) and said mobile station (MS1, MS2) and second utility values of several of said system descriptions for several combinations of pre-coding vectors of said codebook, and
- means for determining an approximation error of said approximation errors with a second value below a second predefined threshold and said at least one system description approximating said characteristic of said transmission channel (TC1, TC2) between said base station (BS) and said mobile station (MS1, MS2).
